# EUROPÄISCHE PATENTANMELDUNG

(11) **EP 4 603 701 A1**
(43) Veröffentlichungstag der Anmeldung: **20.08.2025**
(21) Anmeldenummer: 24157620.6
(22) Anmeldetag: 14.02.2024
(51) Int. Cl.: F03D 80/60

(54) **WINDENERGIEANLAGE**

(71) Anmelder: Wobben Properties GmbH, 26607 Aurich (DE)
(72) Erfinder: Knoop, Frank, 26607 Aurich (DE); Coordes, Ihno, 26632 Ihlow (DE); Krausche, Thomas, 26605 Aurich (DE)
(74) Vertreter: Eisenführ Speiser

(57) **Zusammenfassung**

Es wird eine Windenergieanlage (100) mit mindestens einer zu kühlenden Komponente (120), einer Gondel (200) mit einer Gondelverkleidung (210), welche mindestens ein Gondel-Seitenelement (211), mindestens ein Gondel-Dachelement (212) und/oder mindestens ein Gondel-Bodenelement (213) aufweist. Die Windenergieanlage (100) weist ferner ein Kühlsystem (300) zum Kühlen der zu kühlenden Komponente (210) mit mindestens einem Wärmetauscher (301) mit einer Wärmetauscherfläche (310) auf, welche Teil der Gondelverkleidung (210) ist.

## Beschreibung

Die vorliegende Erfindung betrifft eine Windenergieanlage.

Beim Betrieb einer Windenergieanlage kommt es aufgrund der elektrischen Verlustleistung des elektrischen Generators und der Leistungselektronik zu einer Wärmeentwicklung innerhalb einer Gondel der Windenergieanlage. Zur Kühlung des Generators sowie der Leistungselektronik kann eine Flüssigkeitskühlung oder eine Luftkühlung verwendet werden.

Es ist eine Aufgabe der vorliegenden Erfindung, eine Windenergieanlage mit einer verbesserten Kühlung vorzusehen.

Diese Aufgabe wird durch eine Windenergieanlage nach Anspruch 1 gelöst.

Somit wird eine Windenergieanlage mit mindestens einer zu kühlenden Komponente und einer Gondel mit einer Gondelverkleidung vorgesehen, welche mindestens ein Gondel-Seitenelement, mindestens ein Gondel-Dachelement und/oder mindestens ein Gondel-Bodenelement aufweist. Die Windenergieanlage weist ferner ein Kühlsystem zum Kühlen der zu kühlenden Komponente mit mindestens einem Wärmetauscher mit einer Wärmetauscherfläche auf, welche Teil der Gondelverkleidung ist.

Gemäß einem Aspekt weist das Kühlsystem eine Pumpe zum Pumpen des Kühlmittels in dem Kühlsystem auf.

Gemäß einem Aspekt weist der Wärmetauscher mindestens eine erste Wärmetauscherfläche, eine zweite Wärmetauscherfläche und/oder mindestens eine dritte Wärmetauscherfläche auf. Die erste Wärmetauscherfläche wird durch das zumindest teilweise doppelwandige Gondel-Seitenelement ausgestaltet. Die zweite Wärmetauscherfläche wird durch das zumindest teilweise doppelwandige Gondel-Dachelement ausgestaltet. Die dritte Wärmetauscherfläche wird durch das zumindest teilweise doppelwandige Gondel-Bodenelement ausgestaltet.

Gemäß einem Aspekt weist das Kühlsystem eine Pumpe und einen Ventilator auf, um ein Kühlmedium durch die erste, zweite und/oder dritte Wärmetauscherfläche durchströmen zu lassen.

Die Erfindung betrifft ein Kühlsystem mit einem Wärmetauscher, der zumindest teilweise durch einen Teil der Gondelverkleidung realisiert wird. Hierzu kann die Gondelverkleidung Wärmetauscherkanäle aufweisen, durch welche ein Kühlmedium fließen kann. Zumindest ein Teil der Wandung des Wärmetauscherkanals wird durch die Gondelverkleidung ausgebildet. Die Gondelverkleidung dient somit als Wärmetauscher zwischen dem Kühlmedium in dem Wärmetauscherkanal sowie der Außenluft. Das Kühlmedium in den Kühlkanälen wird durch die Außenluft abgekühlt und kann dann zur Kühlung der elektronischen oder elektrischen Komponenten innerhalb der Gondel verwendet werden.

Die Gondelverkleidung kann durch mehrere Gondelverkleidungselemente ausgebildetwerden. Die Wärmetauscherkanäle können durch doppelwandige Gondelverkleidungselemente realisiert werden. Die Gondelverkleidungselemente können als Gondel-Seitenelement, Gondel-Dachelement und/oder Gondel-Bodenelement ausgestaltet sein. Die Wärmetauscherkanäle können als Kühlkanäle ausgebildet sein.

Die Windenergieanlage weist mindestens eine zu kühlende Komponente und eine Gondel mit einer Gondelverkleidung auf, welche mindestens ein Gondel-Seitenelement, ein Gondel-Dachelement und/oder mindestens ein Gondel-Bodenelement aufweist. Die Windenergieanlage weist ferner ein Kühlsystem zum Kühlen der zu kühlenden Komponente auf. Das Kühlsystem weist einen Wärmetauscher auf, welcher zumindest teilweise in der Gondelverkleidung integriert ist. Der Wärmetauscher weist mindestens einen Kühlabschnitt auf, der zumindest teilweise durch die Gondelverkleidung ausgebildet ist.

Gemäß einem Aspekt der vorliegenden Erfindung weist das Kühlsystem eine erste, zweite und/oder dritte Wärmeaustauschfläche auf. Die erste Wärmetauscherfläche kann das zumindest teilweise doppelwandige Gondel-Seitenelement darstellen. Die zweite Wärmetauscherfläche kann das zumindest teilweise doppelwandige Gondel-Dachelement darstellen. Die dritte Wärmetauscherfläche kann das zumindest teilweise doppelwandige Gondel-Bodenelement darstellen.

Das Kühlsystem weist eine Pumpe und/oder einen Ventilator auf, um das Kühlmedium durch die Wärmetauscherflächen durchströmen zu lassen.

Das mindestens eine Gondel-Seitenelement, das mindestens eine Gondel-Dachelement und/oder das mindestens eine Gondel-Bodenelement ist zumindest teilweise doppelwandig ausgestaltet, so dass jeweils mindestens ein Kühlkanal ausgebildet wird.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage,
- Fig. 2: zeigt eine schematische Schnittansicht einer Gondel der Windenergieanlage,
- Fig. 3A: zeigen jeweils eine perspektivische Ansicht einer Gondel, und
und 3B
- Fig. 4A: zeigen jeweils eine perspektivische Ansicht eines Kühlsystems.
und 4B

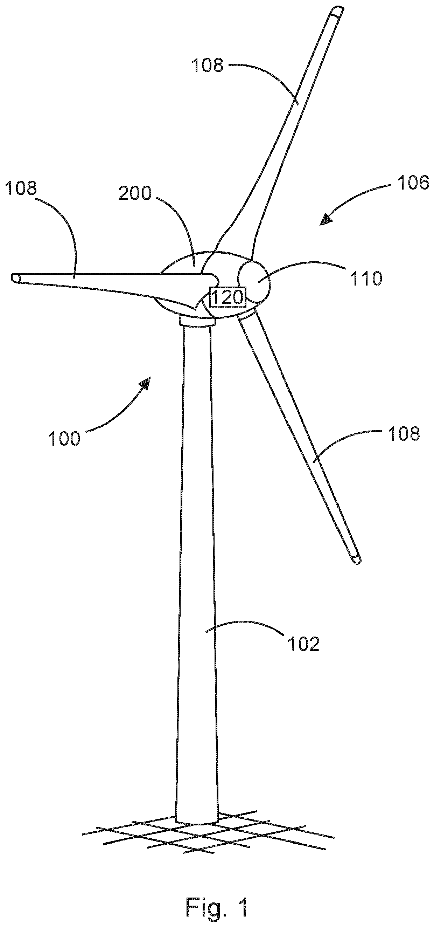

Fig. 1 zeigt eine schematische Darstellung einer Windenergieanlage. Die Windenergieanlage 100 weist einen Turm 102, eine Gondel 200 und Rotorblätter 108 auf, welche mit dem aerodynamische Rotor 106 gekoppelt sind. Der aerodynamische Rotor 106 ist mit einem Rotor eines elektrischen Generators innerhalb der Gondel gekoppelt. Der Rotor des elektrischen Generators wird bei Rotation des aerodynamischen Rotors 106 in Bewegung versetzt, so dass der elektrische Generator 120 Energie erzeugen kann. Innerhalb der Gondel kann Leistungselektronik vorgesehen sein, um die von dem elektrischen Generator gelieferte Energie umwandeln zu können.

Sowohl der elektrische Generator 120 als auch die Leistungselektronik können Wärmequellen darstellen, welche mittels eines Kühlsystems zu kühlen sind. Damit können der elektrische Generator 120 sowie die Leistungselektronik als zu kühlende Komponenten der Windenergieanlage angesehen werden.

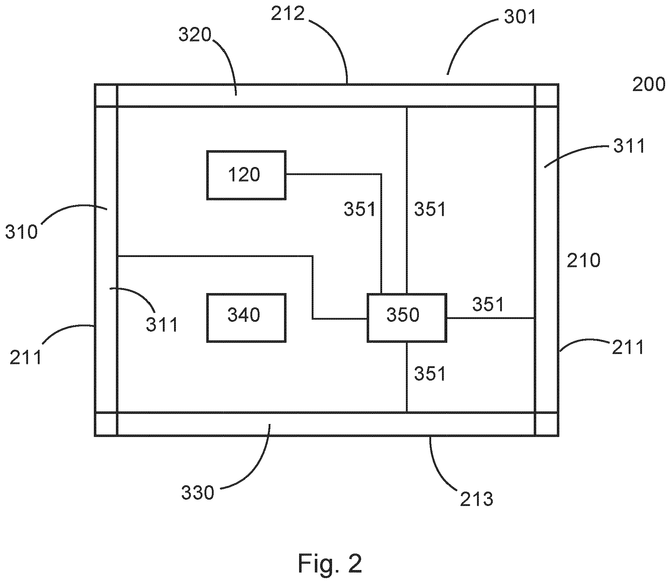

Fig. 2 zeigt eine schematische Schnittansicht einer Gondel der Windenergieanlage. Die Gondel 200 weist eine Gondelgehäuseverkleidung 210 mit einem Gondel-Seitenelement 211, einem Gondel-Dachelement 212 und einem Gondel-Bodenelement 213 auf.

In der Gondel 200 ist ein Kühlsystem 300 vorgesehen. Das Kühlsystem 300 weist einen Wärmetauscher 301 mit einer ersten Wärmetauscherfläche 310, einer zweiten Wärmetauscherfläche 320 und einer dritten Wärmetauscherfläche 330 auf. Die erste Wärmetauscherfläche 310 kann in dem Gondel-Seitenelement 211 vorgesehen sein. Die zweite Wärmetauscherfläche 320 kann in dem Gondel-Dachelement 212 vorgesehen sein. Die dritte Wärmetauscherfläche 330 kann in dem Gondel-Bodenelement 213 vorgesehen sein. In der ersten Wärmetauscherfläche 310 können Seitenelementkanäle 311 vorgesehen sein. In der zweiten Wärmetauscherfläche 320 können Dachelementkanäle 321 vorgesehen sein. In der dritten Wärmetauscherfläche 330 können Bodenelementkanäle 331 vorgesehen sein.

Das Kühlsystem weist ferner mindestens einen Ventilator 340 sowie eine Pumpe 350 auf, welche über Kühlleitungen 351 mit der ersten, zweiten und/oder dritten Wärmetauscherfläche sowie den Seitenelementkanälen 311, den Dachelementkanälen 321 und/oder den Bodenelementkanälen 331 gekoppelt sein können.

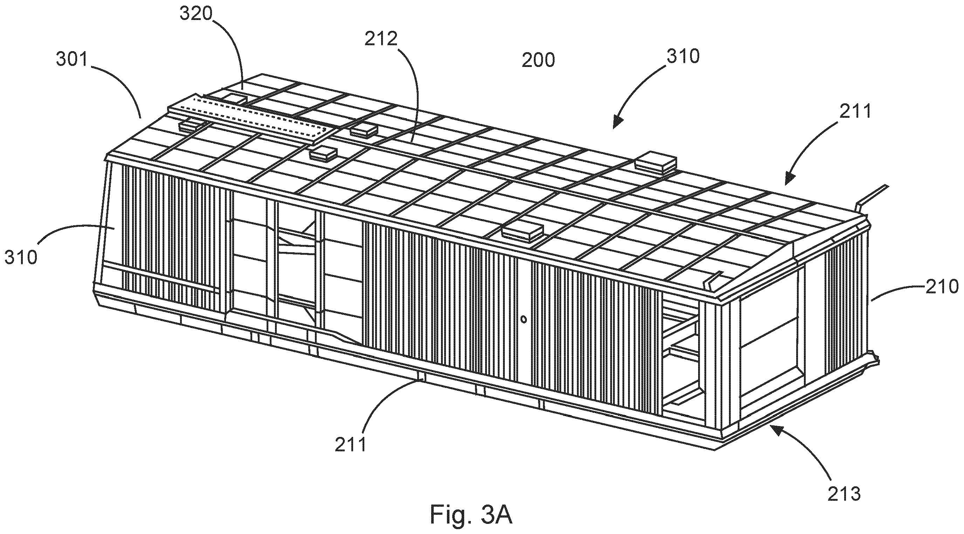

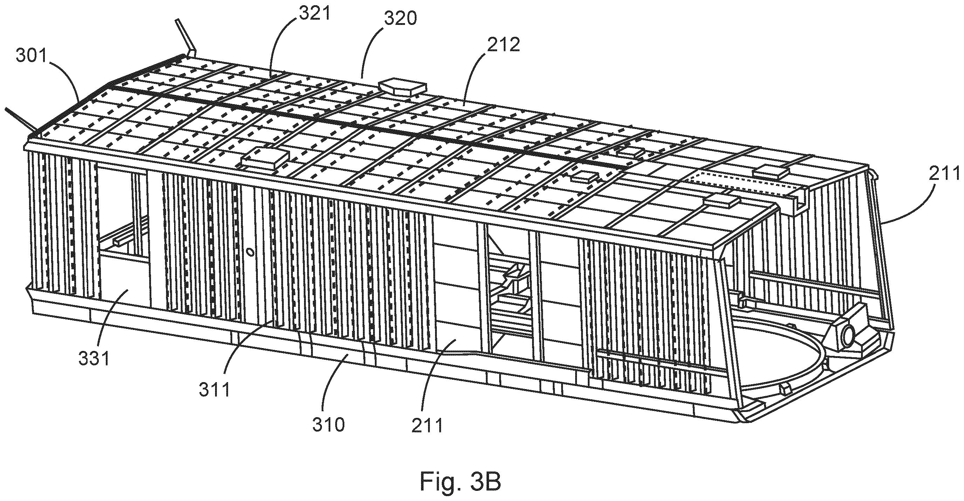

Fig. 3A und 3B zeigen jeweils eine perspektivische Ansicht einer Gondel. Die Gondel 200 weist ein Gondelgehäuse bzw. eine Gondelverkleidung 210 mit zwei Gondel-Seitenelementen 211, einem Gondel-Dachelement 212 und/oder einem Gondel-Bodenelement 213 auf. Ferner sind Seitenelementkanäle 311, Dachelementkanäle 321 und Bodenelementkanäle 331 vorgesehen, welche Teil eines Wärmetauschers 301 sein können.

Der Wärmetauscher 301 des Kühlsystems 300 kann somit Seitenelementkanäle 311, Dachelementkanäle 321 und/oder Bodenelementkanäle 331 aufweisen. Durch die Seitenelementkanäle 311, die Dachelementkanäle 321 und/oder die Bodenelementkanäle 331 kann ein Kühlmedium durch das Kühlsystem fließen. Durch Interaktion mit den Gondelseitenelementen 211, dem Gondeldachelement 212 und/oder dem Gondelbodenelement 213 kann das sich in den Kanälen befindliche Kühlmittel abgekühlt werden. Die Wärme des Kühlmittels kann somit über die Gondelverkleidung nach außen abgegeben werden.

Die Gondelverkleidung der Gondel kann beispielsweise wie bei einem Standardcontainer ausgestaltet sein, wobei die senkrecht verlaufenden Ausbuchtungen in der Containerwandung als Kanäle für das Kühlmittel verwendet werden. Hierbei können optional die Ausbuchtungen durch eine äußere Wandung begrenzt werden, so dass das Kühlmittel durch die Ausbuchtungen fließen kann.

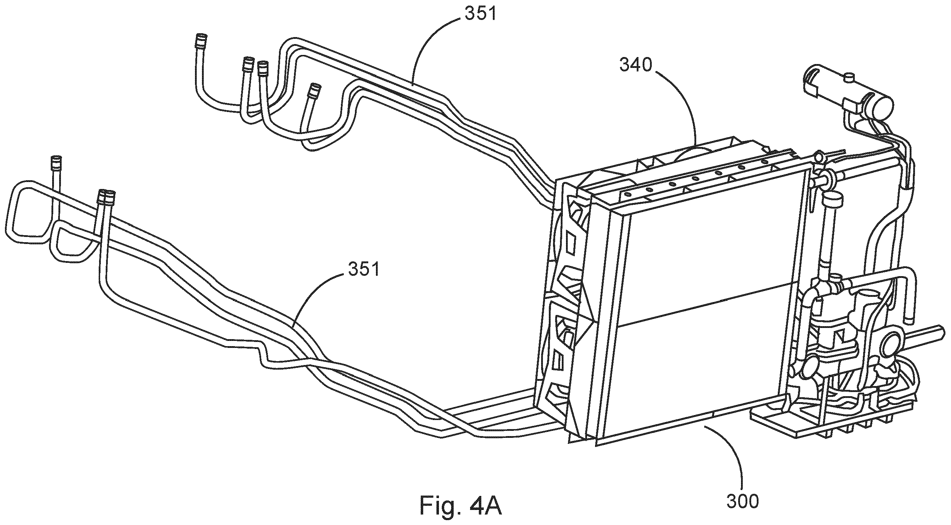

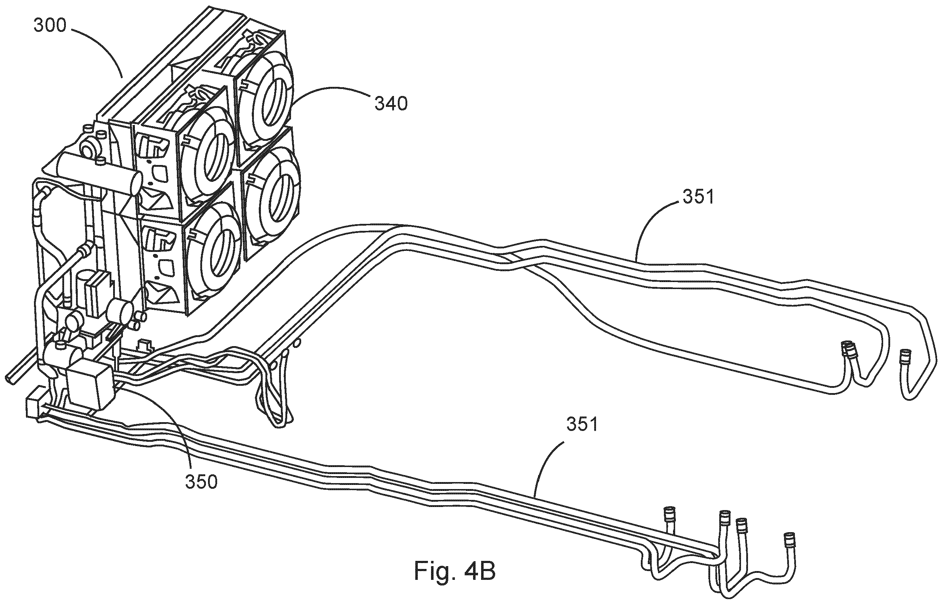

Fig. 4A und 4B zeigen jeweils eine perspektivische Ansicht eines Kühlsystems. Das Kühlsystem 300 weist mindestens einen Ventilator 340 sowie eine Pumpe 350 auf. Die Pumpe 350 ist mit Kühlleitungen 351 gekoppelt. Die Kühlleitungen 351 sind wiederum mit den Seitenelementkanälen 311, den Dachelementkanälen 321 und/oder den Bodenelementkanälen 331 gekoppelt und dienen dazu, Kühlflüssigkeit durch die Seitenelementkanäle 311, die Dachelementkanäle 321 und die Bodenelementkanäle 331 zu pumpen. Die Kühlflüssigkeit fließt dann durch die Seitenelementkanäle 311, die Dachelementkanäle 321 und die Bodenelementkanäle 331. Die Kühlflüssigkeit kommt dann in Kontakt mit der ersten, zweiten oder dritten Wärmetauscherfläche 310, 320, 330. Diese Wärmetauscherflächen 310, 320, 330 werden von der Außenluft umströmt, was zu einer Kühlung der Wärmetauscherflächen 310, 320, 330 führt. Diese Kühlung wird an die Kühlflüssigkeit in den Seitenelementkanälen 311, den Dachelementkanälen 321 und den Bodenelementkanälen 331 weitergegeben, so dass auch die sich dort drin befindliche Kühlflüssigkeit gekühlt wird. Mittels der Pumpe 350 kann die Kühlflüssigkeit innerhalb des Kühlsystems transportiert werden, um eine zu kühlende Komponente 120 kühlen zu können.

### Bezugszeichenliste

- 100: Windenergieanlage
- 102: Turm
- 106: Rotor
- 108: Rotorblätter
- 120: zu kühlende Komponente
- 200: Gondel
- 210: Gondelverkleidung
- 211: Gondel-Seitenelement
- 212: Gondel-Dachelement
- 213: Gondel-Bodenelement
- 300: Kühlsystem
- 301: Wärmetauscher
- 310: erste Wärmetauscherfläche
- 311: Seitenelementkanäle
- 320: zweite Wärmetauscherfläche
- 321: Dachelementkanäle
- 330: dritte Wärmetauscherfläche
- 331: Bodenelementkanäle
- 340: Ventilator
- 350: Pumpe
- 351: Kühlleitungen

## Patentansprüche

1. Windenergieanlage (100), mit
mindestens einer zu kühlenden Komponente (120),
einer Gondel (200) mit einer Gondelverkleidung (210), welche mindestens ein Gondel-Seitenelement (211), mindestens ein Gondel-Dachelement (212) und/oder mindestens ein Gondel-Bodenelement (213) aufweist, und
einem Kühlsystem (300) zum Kühlen der zu kühlenden Komponente (120) mit mindestens einem Wärmetauscher (301) mit einer Wärmetauscherfläche (310), welche Teil der Gondelverkleidung (210) ist.

2. Windenergieanlage (100) nach Anspruch 1, wobei
das Kühlsystem (300) eine Pumpe (350) zum Pumpen von Kühlmittel in dem Kühlsystem (300) aufweist.

3. Windenergieanlage (100) nach Anspruch 1 oder 2, wobei
der Wärmetauscher (301) mindestens eine erste Wärmetauscherfläche (310), eine zweite Wärmetauscherfläche (320) und/oder mindestens eine dritte Wärmetauscherfläche (330) aufweist,
wobei die erste Wärmetauscherfläche (310) das zumindest teilweise doppelwandige Gondel-Seitenelement (211) darstellt,
wobei die zweite Wärmetauscherfläche (320) das zumindest teilweise doppelwandige Gondel-Dachelement (212) darstellt,
wobei die dritte Wärmetauscherfläche (330) das zumindest teilweise doppelwandige Gondel-Bodenelement (213) darstellt.

4. Windenergieanlage (100) nach einem der Ansprüche 1 bis 3,
wobei das Kühlsystem (300) eine Pumpe (350) und einen Ventilator (340) aufweist, um ein Kühlmedium durch die erste, zweite und/oder dritte Wärmetauscherfläche (310, 320, 330) durchströmen zu lassen.

5. Windenergieanlagen-Kühlsystem (300) zum Kühlen einer zu kühlenden Komponente (120) einer Windenergieanlage (100), mit
einer Gondelverkleidung (210) und
mindestens einem Wärmetauscher (301) mit mindestens einer Wärmetauscherfläche (310), welche Teil der Gondelverkleidung (210) einer Windenergieanlage (100) ist.
